# EUROPEAN PATENT SPECIFICATION

(11) **EP 0 321 803 B1**
(45) Date of publication and mention of the grant of the patent: **17.03.1993**
(21) Application number: 88120635.3
(22) Date of filing: 09.12.1988
(51) Int. Cl.: B62K 25/00

(54) **Front wheel suspension for motorcycles and the like**
Vorderradaufhängung für Motorrad und dergleichen
Suspension de roue avant pour moto ou semblable

(30) Priority: 23.12.1987 IT 2320687
(43) Date of publication of application: 28.06.1989
(73) Proprietor: CAGIVA MOTOR ITALIA S.P.A., I-21100 Varese (IT)
(72) Inventor: Botta, Luigi, I-22077 Olgiate Comasco Como (IT)
(74) Representative: Luksch, Giorgio, Dr.-Ing.

(56) References cited:
- EP-A- 0 236 196
- FR-A- 2 599 705
- GB-A- 2 015 949
- US-A- 4 526 249

## Description

This invention relates to a suspension for motorcycles and similar vehicles according to the preamble of the mainclaim.
Various types of front wheel suspensions particularly for motorcycles are known comprising one or more longitudinal rocker arms and designed to overcome the well known drawbacks of suspensions of the telescopic fork type, which are still used by most motorcycle manufacturers.
In particular, these rocker arm suspensions give the motorcycle a greater antisinking effect, for example during braking, than that provided by telescopic fork suspensions.
However, even such suspensions comprising one or more rocker arms have various drawbacks, such as a certain frontal bulk or the need to use a relatively complicated lever or linkage system for steering the front wheel.
US-A- 4 526 249 describes a front suspension system for a motorcycle comprising a triangular upper control arm and an arcuately-shaped lower control arm which are hinged to the body of the motorcycle for swinging motion. The upper and lower arms are hinged to the frame of the motorcycle as to swing in a vertical plane that extends along the longitudinal axis of the motorcycle. The upper and lower arms form an articulated parallelogram.
The lower arm is arcuate in shape to permit the front wheel of the vehicle to rotate through its full range of steering motion. The upper arms are located between the radiator of the motorcycle and its front wheel.The upper and lower control arms are connected to a kingpin which extends generally along the left side of the front wheel. Said connections are achieved by means of an upper ball joint and a lower ball joint. The upper ends of the kingpin is connected by means of an universal joint to the lower end of a telescopic, splined steering shaft. This latter is connected by means of a second universal joint to a rotatable handlebar shaft to which an handlebar assembly is affixed. This suspension presents a big frontal bulk and involves a complicated lever or linkage system for connecting the handlebar shaft (and, therefore, the handlebar assembly) to the kingpin.
GB A-2 015 942 describes another known front wheel suspension having two arms parallel and hinged to a plate fixed on the motor of said vehicle, said arms forming an articulated parallelogram. Forward ends of these arms support pivots having a common axis, displaced from the axle of the front wheel, about which pivotes a triangular element which supports the axle of the wheel. The pivots are able to carry out angular or rotational movements in the plane of the wheel along circles the centres of which are defined by pivots between said arms and the plate fixed to the vehicle. A plurality of steering elements comprising bars, universal joint and a handlebar, is connected to a lever which operated on the triangular elements supported by the forward ends of the arms connected to the motor. This permits steering of the wheel.
This known solution has the same drawbacks of the suspension system described in US-A-4 526 249.
EP-A- 0 236 196 describes a connection between steering and suspension in the form of a pair of hinged links.
An object of the present invention is therefore to provide a front wheel suspension for a motorcycle or similar vehicles, which has the same advantages as the known suspensions comprising one or more rocker arms, but which at the same time is of less frontal bulk and enables the front wheel to be steered directly.

A further object is to provide a suspension which induces lesser stress inthe vehicle frame than known suspensions, provides a better antisinking effect during braking and undergoes lesser variation in its geometrical parameters during the deviation of the front wheel when the vehicle moves along a rough road.

These and further objects which will be apparent to the expert of the art are attained by a suspension for motorcycles and similar vehicles of the kind described in the preamble of the main claim and characterised as set in the characterising part of said main claim.

The present invention will be more apparent from the accompanying drawing provided by way of non-limiting example and in which:

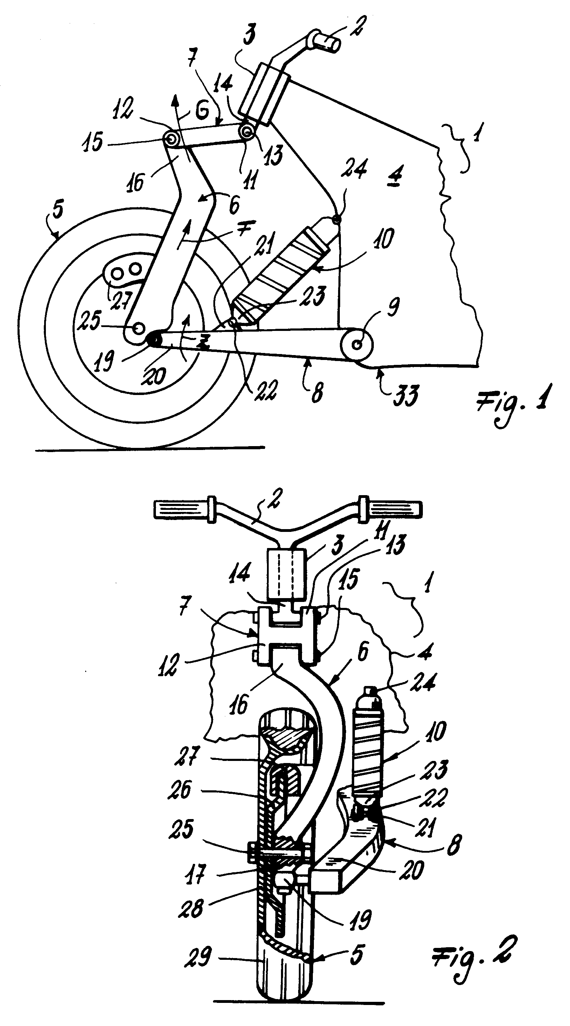

Figure 1 is a side view of the front part of a motorcycle comprising the suspension according to the present invention; Figure 2 is a front view of the motorcycle of Figure 1 with some components shown only in part for greater clarity.

The figures show the front part of a motorcycle 1 with a handlebar 2 mounted rotatably in a conventional manner in the steering sleeve 3 of a frame 4.

The suspension according to the present invention is mounted on the front wheel 5 of the motorcycle 1. The suspension comprises essentially an arm 6 acting as a hub carrier connected upperly to the motorcycle handlebar 2 by means of an intermediate element 7. To the bottom of said arm, defined more simply hereinafter as the hub carrier, there is connected a rocker arm 8 which is itself connected to a lower part 33 of the motorcycle frame 4 by a hinge 9 with its axis transverse to the motorcycle. At an intermediate point said arm 8 carries a damping member 10 which is also connected to said frame 4.

The intermediate element 7 is substantially of H-shape and is hinged at its upper end 11 and lower end 12 to the handlebar 2 and hub carrier 6 respectively. Specifically, by means of a hinge 13 with its axis transverse to the motorcycle 1, the intermediate element 7 is connected at its upper end 11 to the bottom of a steering pin 14 which is upperly rigid with the handlebar 2. In the same manner the element 7 is connected to the upper end 16 of the hub carrier 6. By means of these connections the user can steer the motorcycle by operating the handlebar 2.

The rocker arm 8 is connected to the hub carrier 6 by a ball joint 19 lying on the central plane through the wheel 5.

Said rocker arm 8, which is suitably arched or shaped to allow the steering movements for the wheel 5, comprises in a substantially imtermediate position a projection 21 extending towards the upper part of the motorcycle 1. To the projection 21 there is hinged at 22 one end 23 of the damping member 10 which can be for example a traditional spring damper. Finally, the damping member 10 is connected at its other end, by a hinge 24 with its axis transverse to the motorcycle, to the motorcycle frame 4 at a point between the steering sleeve 3 and the hinge 9.

Finally, the wheel 5 comprises a hub 25, a conventional disc 26 rotating rigidly with the hub and on which there acts a brake caliper 27 fixed to the hub carrier 6, an a wheel rim 28 carried by the hub 25 and on which the tyre 29 is mounted.

During operation of the suspension (see Figure 1), when the motorcycle 1 moves for example along rough ground the hub carrier arm 6 rigid with the wheel 5 moves towards the handlebar 2 (arrow F) with the result that the intermediate element 7 rotates (arrow G) about the hinges 15 and 13. At the same time the rocker arm 8 rotates (arrow Z) about the hinge 9 and at the ball joint 19 to compress the damping member 10. In this manner, the user driving the motorcycle 1 is not jolted and can maintain his proper driving position.

Such a suspension is easy to construct and enables steering to be done directly instead of using linkages and lever systems interposed between the handlebar and wheel. Moreover, such a suspension is of minimum frontal bulk, allowing easy access to the motorcycle engine both during engine assembly and during its maintenance.

## Claims

1. A front wheel suspension for motorcycles and similar vehicles comprising a handlebar (2) and a frame (4), an indirect connection between the handlebar (2) and an arm (6) carrying the front wheel (5), a damping member (10) hinged at its respective ends to the vehicle frame (4) and to a rocker arm (8) hingedly connected to said frame (4) and to the arm (6) characterised in that said indirect connection is formed in an intermediate steering force transmitting element (7) hinged at its ends (11,12) to the handlebar (14) and to the arm (6), said intermediate element (7) and said arm (6) forming an articulated triangle.

2. A suspension as claimed in claim 1, characterized in that the intermediate element (7) is an arm having one end (11) hinged (at 13) to a steering pin (14) rigid with the handlebar (2), and its other end (12) hinged (at 15) to the upper end (16) of arm (6).

## Patentansprüche

1. Vorderradaufhängung für Motorräder und ähnliche Fahrzeuge, mit einer Lenkstange (2) und einem Rahmen (4), einer indirekten Verbindung zwischen der Lenkstange (2) und einem Arm (6), der das Vorderrad (5) trägt, mit einem Stoßdämpfer (10) der an seinen jeweiligen Enden am Fahrzeugrahmen (4) und an einem Schwenkarm (8) angelenkt ist, der mit dem Rahmen (4) und dem Arm (6) schwenkbar verbunden ist, **dadurch gekennzeichnet**, daß die indirekte Verbindung in einem Lenkkraft übertragenden Zwischenelement (7) gebildet ist, welches an seinen Enden (11, 12) schwenkbar mit der Lenkstange (2) und dem Arm (6) verbunden ist, wobei das Zwischenelement (7) und der Arm (6) ein Gelenkdreieck bilden.

2. Aufhängung nach Anspruch 1, **dadurch gekennzeichnet**, daß das Zwischenelement (7) ein Arm ist, der an einem Ende (11) schwenkbar (bei 13) an einem Lenkzapfen (14) befestigt ist, der fest an der Lenkstange sitzt und dessen anderes Ende (12) schwenkbar (bei 15) am oberen Ende (16) des Arms (6) befestigt ist.

## Revendications

1. Une suspension de roue avant pour les motos et véhicules similaires comprenant un guidon (2) et un cadre une liaison indirecte entre le guidon (2) et un bras (6) portant la roue avant (5), un élément d'amortissement (10) articulé à ses extrémités respectives sur le cadre du véhicule (4) et sur un bras oscillant (8) relié avec articulation à ce cadre (4) et au bras (6) caractérisée en ce que la liaison indirecte est formée par un élément intermédiaire de transmission de force de direction (7) articulé à ses extrémités (11, 12) sur le guidon (14) et sur le bras (6), cet élément intermédiaire (7) et ce bras (6) formant un triangle articulé.

2. Une suspension selon revendication 1, caractérisée en ce que l'élément intermédiaire (7) est un bras ayant une extrémité (11) articulée (en 13) sur un pivot de direction (14) solidaire du guidon (2) et son autre extrémité (12) articulée (en 15) sur l'extrémité supérieure (16) du bras (6).
